(19)

**Europäisches Patentamt**

**European Patent Office**

**Office européen des brevets**

(11)  **EP 4 119 892 B1**

(12)  **EUROPEAN PATENT SPECIFICATION**

(45) Date of publication and mention
of the grant of the patent:
**09.10.2024 Bulletin 2024/41**

(21) Application number: **21191019.5**

(22) Date of filing: **12.08.2021**

(51) International Patent Classification (IPC):
**G01C 11/04** *(2006.01)*     **G06T 7/73** *(2017.01)*
**G01C 5/00** *(2006.01)*

(52) Cooperative Patent Classification (CPC):
**G01C 11/04; G01C 5/00; G06T 7/75**

(54) **A METHOD FOR DETERMINING A HEIGHT OF AN OBJECT FROM A SINGLE IMAGE RECORDED BY AN IMAGING DEVICE COMPRISED BY AN AERIAL VEHICLE**

VERFAHREN ZUR BESTIMMUNG DER HÖHE EINES OBJEKTS AUS EINEM EINZELBILD, DAS VON EINER BILDGEBENDEN VORRICHTUNG EINES LUFTFAHRZEUGS AUFGENOMMEN WURDE

PROCÉDÉ DE DÉTERMINATION DE LA HAUTEUR D'UN OBJET À PARTIR D'UNE SEULE IMAGE ENREGISTRÉE PAR UN DISPOSITIF D'IMAGERIE COMPRIS DANS UN ENGIN VOLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2021 PT 2021027662**

(43) Date of publication of application:
**18.01.2023 Bulletin 2023/03**

(73) Proprietor: **Universidade Nova de Lisboa**
**1099-085 Lisboa (PT)**

(72) Inventors:
• **PAINHO, Marco Octávio Trindade**
**1070-312 LISBOA (PT)**
• **TONINI, Andrea**
**1070-312 LISBOA (PT)**
• **CASTELLI, Mauro**
**1070-312 LISBOA (PT)**

(74) Representative: **Schulz Junghans**
**Patentanwälte PartGmbB**
**Großbeerenstraße 71**
**10963 Berlin (DE)**

(56) References cited:
**US-A1- 2020 273 150**

**Description**

The invention relates to a method for determining a height of an object, such as a person or a person's body part from a single image recorded by an imaging device comprised by an aerial vehicle

In many applications of aerial telemetry, the camera-to-target distance, i.e. the distance between the aerial vehicle and the target needs to be known in order to establish a metric in the recorded images. This parameter may be difficult to be retrieved due to the limited positional accuracy of the aerial vehicle. Common solutions to overcome this issue are: a) equip the aerial vehicle with special positioning systems, e.g. real-time kinematic-RTK positioning, which are uncommon for regular aerial vehicles and it requires special knowledge for execution, e.g. photogrammetry and/or GIS; b) acquire the coordinates of several points visible in the image using GPS or other specialized positioning systems, such as GLONASS, this approach is also quite time consuming; c) identify vanishing lines in the scene, although this approach might be not very accurate especially when dealing with aerial systems.

For example, US 2020/273150 A1 discloses a method for determining three-dimensional coordinates of a feature in a landscape by means of a principal axis estimation from the image recorded with a camera attached to an aerial vehicle having an oblique view on the scene, as laid out in the previous paragraph, this approach may not be very accurate when dealing with aerial vehicles.

Particularly, the invention offers a solution to accurately retrieve the relative camera-to-target distance by knowing only the ground distance between two points, a having a ruler object visible in the image. This approach does not require to collect GPS measures or managing geospatial information. It can be therefore deemed suitable for execution by non-technical personnel. Moreover, it can be extremely quick and suitable for automatization.

The invention allows determination of a relative altitude of the aerial vehicle as well as the height of any target, such as a person present in scene form a single image only. The invention further allows measuring a length and an orientation of body parts such as arm span, upper arm, fore arm, hand, thigh, lower leg, foot, length of the head, distance between eyes, etc., whose relationship may give accurate estimation of the stature (anthropometric proportions).

These advantages over the existing art, are achieved by the method having the features of claim 1.

Advantageous embodiments are described in the dependent claims.

According to claim 1, a method, particularly a computer-implemented for determining a height an object, such as a person's body part above an imaginary or a real horizontal plane from a single image recorded by an imaging device comprised by an aerial vehicle is provided, particularly wherein the object is in contact with the horizontal plane.

Particularly, in case the method is computer-implemented, the method may comprise hardware devices configured to issue and/or receive commends and instructions between devices, components and a user such as to execute the method steps.

The imaging device is configured to record an image in an image space from an object space, and the method comprises the steps of:

- Flying with the aerial vehicle above the horizontal plane,

- Recording a single image with the imaging device, wherein the object is comprised by the image,

- Acquiring imaging device parameters, wherein the imaging device parameters comprise information on an orientation of the imaging device at least with respect to a pitch and a roll angle of the imaging device in relation to a world coordinate system, when the image is recorded and a focal length as well as an information comprising the pixel pitch of the imaging device,

- Determining an information on an elevation, particularly the elevation of the imaging device and at least one point of contact at which the object is in contact with the plane in the object space, particularly determining an elevation of the aerial vehicle above the horizontal plane,

- Determining the height of the object above the horizontal plane in the object space by means of a projection model that relates coordinates in the object space with coordinates in the image space (and vice versa) using the recorded image, the imaging device parameters and the information on the elevation, particularly the elevation of the imaging device.

The imaging device is particularly a camera configured for two-dimensional imaging, more particularly a monocular camera.

According to one embodiment, the aerial vehicle is an unmanned aerial vehicle, such as a multicopter or another remote-controlled aerial vehicle.

In another embodiment the aerial vehicle is an aircraft.

The imaging device may be attached or comprised by the aerial vehicle. Furthermore, the imaging device and/or the aerial vehicle may be configured to determine a position and/or an orientation of the camera, as well as other imaging device parameters. In the context of the current specification, the position as well as the orientation may be considered as imaging device parameters.

The term "horizontal plane" particularly relates to an even plane that has a correspondence in the object space or, wherein said plane may be solely an imaginary plane that is associated to a specific position in the object space or a real plane such as a court or a field. Typically, in case the horizontal plane is an imaginary plane, the horizontal plane has at least one tangential point with a surface, such as the ground in the object space.

The term "horizontal" particularly relates to a direction perpendicular to gravity.

The method is configured to be executed at least partially on a computer, such that the method comprises computer-implemented method steps.

The object space corresponds to a space in the world that may be recorded with the imaging device, wherein the image space is a space at which an image of at least a portion of the object space may be formed by the imaging device. The imaging device particularly comprises a pixel array onto which the image of the object space is projected during recording of the image. The image may be formed from the recorded signal of the pixel array.

The object from which the height is to be determined is particularly completely comprised in the image.

The object may be a person, one or more body parts of a person, an animal, a plant, a vehicle, a building, or an infrastructural object.

It is important to note that at least some of the imaging device parameters need to be determined at the moment or in close temporal vicinity the moment the image is recorded. The term "close temporal vicinity" particularly refers to a time interval that is so short that the imaging device parameter has changed only to a minor extent or not at all.

The imaging device parameters also comprise information on the pixel pitch. This information serves as an internal reference that allows to estimate lengths and heights in the object space, when the focal length is known.

The information regarding the pixel pitch may not be necessary directly provided in form of the pixel pitch, but can for example also be derived from the pixel array size and the number of pixels comprised therein. In the context of the current specification, such an indirect information is also considered as an information on a pixel pitch.

The imaging device parameters may be associated to the image for example by means of image metadata, such as a data file header information of the image.

According to another embodiment of the invention, the recorded image is associated with the acquired imaging device parameters after and/or during the image is recorded.

A crucial imaging parameter is the orientation of the imaging device relative to a world coordinate system in terms of a pitch and a roll angle of the imaging device.

The term "world coordinate system" particularly refers to a geographical coordinate system.

The world coordinate system is for example given by a Cartesian coordinate system that is has its origin at the object in the object space. However, other common coordinate system may be used such as for example a spherical coordinate system comprising latitude, longitude and elevation or simply a geocode.

Particularly, the world coordinate system is fixed relative to the center of the imaging device. In contrast to the world coordinate system an image-bound coordinate system may be defined, that is based on the recorded image. A transformation between the world coordinate system and the image-bound coordinate system may be achieved by determining the imaging device parameters, such as the orientation of the imaging device. It is noted that, as only a height part of the object is to be evaluated, and in particular only a position and orientation of the imaging device relative to the object in the object space, not all relations between the world coordinate system and the image-bound coordinate system may be determined. As such with regard to orientation, it is sufficient to use the pitch and the roll angle.

The terms "roll angle" and pitch angle" particularly relate to the Euler angles. More particularly, these terms relate to the angles used for describing an orientation of the aerial vehicle, however, in the context of the current specification these terms are used to describe an orientation of the optical axis of the imaging device in the analogous way.

For example, applying a suitable projection model for the imaging device allows to establish a metric in the image space that is associated to the object space, i.e. the world coordinate system. Once this metric is established, it is not only possible to determine the height of the object but also a length, an orientation or a distance along another direction.

By determining the information on the elevation such metric can be determined.

According to another embodiment of the invention, the coordinates in the object space are related by means of the projection model with the coordinates in the image space using the recorded image, the imaging device parameters and the information on the elevation (V) of the aerial vehicle.

From this relation the height of the object or object's subparts above the horizontal plane in the object space by means of vertical section planes may be calculated.

According to another embodiment of the invention, at least a portion of the image is corrected for optical distortions or aberrations. Distortions and aberrations may have their origin for example in the imaging optics. These aberrations may be corrected using an appropriate computer-implemented correction method.

This embodiment allows for a more precise estimation of the height of the object any other parameters that may be derived from the image.

In order to determine the height of the object in the image with respect to the horizontal plane it is mandatory to determine a metric of the image in relation to the object space. This is for example done by determining an information on the vertical distance between the imaging device, particularly the optical axis of the imaging device and at least one point of contact at which the object is in contact with the horizontal plane in the object space. The vertical distance is referred to as elevation of the imaging device.

The elevation is measured perpendicularly to the horizontal plane. The elevation of the imaging device may be derived from a distance between the imaging device and the point of contact.

The term "information on the elevation" particularly refers to a parameter that is accessible to the method and from which, for example by using mathematical relations between the elevation and the parameter, the elevation can be calculated from. Therefore, the information on the elevation can be the distance between the imaging device and the point of contact, as long as additional information is available that would allow to extract the value of the elevation.

In some embodiments, the information on the elevation is the elevation of the aerial vehicle. In the following the term "information on the elevation" and elevation are used interchangeably.

The point of contact may be provided by means of a coordinate in the image space and/or in the object space. The coordinate is equivalent to a position of the point of contact.

The point of contact may be determined by an automatic detection algorithm that is configured to detect the object or person in the image as well as the point of contact, particularly wherein the point of contact may be located at the feet of the person. Therefore, the point of contact may be determined by a foot detection algorithm or a foot detection method that is trained for foot detection. The point of contact can then be related by mean of the projection model to the object space.

Alternatively, or additionally, it is possible to determine the coordinate of the point of contact in object space.

The projection model that is used for determining the height of the object above the horizontal plane may be for example a pinhole camera model.

According to an embodiment of the invention, the determined height of the object is put out, e.g. on a display or on the recorded image.

Particularly, the determined height of the object may be put out on the recorded image with a graphical object relating the height value with the object, e.g. the person or the body part of which the height has been determined for.

According to an example not according to the claims, the elevation of the imaging device is determined from an altitude of the imaging device or the aerial vehicle obtained by a positioning system, particularly by a global satellite-based positioning system, such as GPS and a position, particularly an elevation of the at least one point of contact of the object, particularly wherein the position (or coordinate) of the at least point of contact is determined from a digital elevation model or a digital map.

This example is particularly advantageous, for situations where a precise positioning of the aerial vehicle as well as the point of contact is possible by the positioning system and the digital elevation model.

According to the invention, a ruler object in the object space is recorded in the same image, wherein the ruler object has a known extend along at least one direction in the horizontal plane in the object space, that is the ruler object extends at least partially in the horizontal plane, wherein the elevation of the imaging device is determined from the imaging device parameters and the extent of the ruler object in the plane.

The use of a ruler object, that particularly extends in the horizontal plane, allows for a dramatically increased applicability of the method, as almost any structure extending in the horizontal plane can be used as the ruler object.

The possibilities regarding the ruler object are manifold. For example, ground or road markings with a known length, other line-shaped objects on the ground may serve as the ruler object. Furthermore, it is possible that the ruler object is projected by means of a projector to the horizontal plane. For this purpose, the ruler object does not need to be project in the visible light spectrum, but may be projected in the infrared spectrum that is recorded in the image.

In urban areas as well as in rural areas there is a vast number of objects of which a horizontal extent is known. For example, a distance between delineator posts on highways or streets is known and fixed. Thus, the ruler object may be the distance between such two posts.

Another example for a ruler object in the meaning of the specification is the extend of a building at the horizontal plane. While the building may extend also vertically, for the method it is sufficient to know an extend of the building along the horizontal plane in the horizontal plane. As such for example the length of a wall of the building where it touches the ground may serve as the ruler object.

As can be understood, the term "ruler object" should be understood in a broad sense, as the ruler object needs to be only configured to determine a horizontal distance or length.

This provides a method that is applicable on a wide range of applications.

However, the use of a ruler object provides another advantage over other methods in the art. The use of the ruler object rids the method of the need to acquire external coordinates, e.g. from GPS or another system, which renders the method broadly applicable and potentially much more accurate. This is due to the inherent inaccurate determination of global positioning systems that would not allow an accurate determination of the height of the object. In turn, knowing the extent of the ruler object allows a determination of the height of the object in the range of a few centimeters, particularly in the range of 1 cm to 10 cm, more particularly in the range between 2 cm and 5 cm.

Other positioning systems, e.g. based on ultra-sound, optical flow evaluation may not provide an accuracy that is sufficiently high and reliable for estimating the height of the object.

Therefore, the method according to the invention renders the method more accurate over positioning system-based methods.

The use of the extent of a ruler object extending in the horizontal plane for estimating an elevation of the imaging device is not known in the art and allows an autonomous determination of the height of the object.

According to another embodiment of the invention, the method determines the height of the object devoid of any information acquired and provided by an external positioning system.

The term "positioning system" particularly refers to a positioning system which is configured to determination the position of an object by evaluating a signal runtime or a difference or delay in signal runtimes from different signal sources.

Further, the term "positioning system" may particularly refer to sensor-based positioning systems comprising at least one sensor, wherein the sensor is configured to determine the position of the aerial vehicle, particularly wherein the sensor signal is used, particularly only used for determining the position of the aerial vehicle. Such sensors may form ultra-sound-based or optical flow-based positioning systems.

An acceleration or inertial measurement unit (IMU) is not considered a positioning system in the context of the current specification.

Thus, the method according to the invention allows to determine the height of the object without information provided by a positioning system.

According to another embodiment of the invention, the method determines the height of the object only from the imaging device parameters, the recorded image and the and the ruler object, particularly wherein the imaging device parameters consist of an information on the roll and the pitch angle of the imaging device, an information on the focal length and the pixel pitch.

According to another embodiment of the invention, the projection model is a pinhole camera projection model.

A pinhole projection model allows for an accurate and facile determination of the height of the object, while requiring minimal information on the imaging device and other parameters.

According to another embodiment of the invention, for determining the height of the object in the object space, the following steps are executed:

- Relating coordinates in the image space with coordinates in the object space with the projection model that is determined by the imaging device parameters and information on the elevation of the imaging device,

- Selecting at least one reference point in the image that is comprised by the horizontal plane, wherein said reference point either corresponds to the at least one point of contact of the object with the horizontal plane, particularly in the image and the object space or has a known lateral distance in the plane to the at least one point of contact, e.g. along an x-, y- direction of a Cartesian coordinate system, wherein a z-direction is oriented perpendicular to the horizontal plane,

- Determining an imaginary vertical sectional plane in the object space that extends perpendicularly to the horizontal plane at the reference point and that comprises the at least one reference point, wherein the height of the object is determined from an intersecting point or a projected intersecting point of the object with the sectional plane in the image, and wherein the height of the object equals a distance, particularly a vertical distance between the at least one reference point and the intersection or the projected intersection of the object with the sectional plane.

This embodiment allows for a precise determination of the height of the object and it particularly interesting for determining the height of a body part. The sectional plane is ideally chosen such that it comprises a portion of the body part of which the height is to be determined.

For example, in a person standing upright, in order to determine the height of the person from foot to head, the sectional plane would be arranged through or close to the coronal plane of the person.

For any point comprised by the sectional plane the height above the horizontal plane may be determined with very high accuracy.

That is, with a single sectional plane a plurality of heights for different body parts having portions comprised in the sectional plane may be determined.

According to another embodiment of the invention, the object is the head of the person, particularly a vertex of the head of the person.

This embodiment allows the height determination of a person when standing upright.

According to another embodiment of the invention, the point of contact is at a foot of a person of which the height of a body part is to be determined, particularly wherein the point of contact is at a sole of a foot, or wherein the points of contact are at the feet, particularly at the soles of the feet of the person.

The method according to one of the preceding claims, wherein two points of contacts are selected such that an orientation and position of the sectional plane is uniquely defined by said two points and the vertical extension of the sectional plane with regard to the horizontal plane, particularly wherein the two points of contact correspond to the feet of the person touching the horizontal plane.

The two points of contact may serve as the reference points comprised by the sectional plane. Alternatively, the two points of contact define a straight line, wherein the sectional plane is parallelly shifted with respect to the straight line.

This embodiment allows for taking into account the pose of the person. For example, when the person is walking the sectional pane may extend essentially along the median plane of the person body, wherein in case the person is standing, the sectional plane may essentially extend along the coronal plane.

According to another embodiment of the invention, a lateral distance between the unmanned aerial vehicle and the person is greater than 1 m.

According to another embodiment of the invention, the image comprises a plurality of ruler objects located in the horizontal plane, wherein for each of the ruler object the extent along at least one direction in the object space is known, particularly wherein the ruler object of the plurality of ruler objects with the largest extent in the image in the image space, i.e. the length in the image space may depend on the perspective on the scene, is selected for determining the height of the object above the plane in the object space, and particularly wherein said selected ruler object is also used for determining the information on the elevation of the imaging device.

The selection priority for the ruler objects according to this embodiment may be applicable in case the extent of the ruler objects is known with the same accuracy.

Otherwise, the selection of the ruler object that is used for determining the height of the body part may be dependent also on the accuracy with which the extent of the ruler objects is known.

As a rule of thumb, the ruler object with having the greatest extent and the highest accuracy should be chosen.

According to another embodiment of the invention, the ruler object has an extent in the image of more than 50 pixels, more particularly more than 100 pixels, even more particularly more than 1.000 pixels.

This allows for a precise determination of the length of the ruler object in the image, while keeping the relative error in length low.

According to another embodiment of the invention, the extent of the ruler object in the plane in the object space is determined or acquired from a map or satellite data.

This embodiment allows for a facile application of the method without the need of measuring the extent directly on the ground, but to retrieve the information via other sources.

Alternatively, the extent of the ruler object may be determined by a direct measurement.

According to another embodiment of the invention, the elevation of the imaging device above the point of contact is determined in real-time, particularly wherein the determination of the height of the object is determined in real-time.

This allows for a real-time application of the method.

According to another embodiment of the invention, the at least one point of contact is determined by a pattern recognition method, such as an artificial neural network.

This embodiment allows for an automatic execution of the method after the image is recorded without any further user input, indicating the point of contact.

According to another embodiment of the invention, the object is a body part, particularly wherein the body part is the vertex of the head and wherein the body part is identified in the image by a pattern recognition method, such as an artificial neural network.

This embodiment, particularly combined with the preceding embodiment allows for a fully automatic and autonomous execution of the determination of the height of a person or a predefined body part for which detection the artificial network is trained.

According to another embodiment of the invention, a distance and/or a length and an orientation of a portion of the object in the object space is determined from the image.

This embodiment allows for a posture estimation of the person, such as sitting, standing, walking, running, and/or for a determination of the length or extent of a selected body part or a body portion.

In contrast to a body part, such as an arm, a head, the vertex of the head, a body portion may be a portion of a body part.

For estimating any of these parameters, in addition to a height of a body part or a body portion, a lateral extent of the body part or portion may be determined as well with the projection model.

As such, it is possible for example to determine a height the ankle and the knee and at the same time to determine an orientation and length of the lower leg.

Doing so, allows for measuring the extent and orientation of some or all body parts of the person.

This in turn allows for example for a very precise posture determination.

According to another embodiment of the invention, a posture of the person is determined by evaluating a plurality of lengths and orientations of body parts or body portions.

By doing so, the height of a person can be determined, when the person would stand upright, even though the person might sit at the moment the image is taken.

According to another embodiment of the invention, if an estimated statistical error of the determined height of the object or the portion of the object above the horizontal plane is greater than a predefined error value, particularly wherein the error value is greater than 15 cm, more particularly greater than 10 cm or 5 cm, one or more of the following parameters is adjusted and the image is retaken, particularly automatically:

- A pitch angle of the imaging device, particularly wherein the pitch angle is adjusted to be in a range of 5° and 70°;

- A distance of the imaging device to the ruler object, particularly wherein the distance is decreased;

- The extent of the ruler object in the image, particularly wherein the extent of the ruler in the image is adjusted by taking the image from a different perspective on the ruler object.

This embodiment allows for arriving at a predefined accuracy for the determined height of the object, by providing adjustment parameters that may lead to an improved accuracy in the height determination.

The invention in general relates to a computer-implement method particularly comprising some method steps that require extensive calculation and matrix algebra in order to determine the height of the object. These calculations cannot be performed in the human mind alone or with the aid of paper and pen due to the complexity of the problem and the number of calculations necessary. As such, particularly a real-time application of the method cannot be achieved using pen and paper.

Further, technical features that are implicitly provided for executing the method are at least one computer with a processor configured to receive the recorded image from the imaging device on the aerial vehicle.

The computer may be arranged on the vehicle or externally, such that the image data and imaging device parameters are transmitted via an electromagnetic wave signal to the in computer.

The computer may then be configured to determine the elevation of the aerial vehicle above the horizontal plane, by evaluating the imaging device parameters, and the image as laid out in the preceding and following paragraphs.

Particularly, the determination of a point of contact with the horizontal plane may be done either by user input and selection by the user, or automatically by the computer.

The same applies to the determination of the height of the object. It is possible the object is selected by a user of the method or automatically by the computer.

Exemplary embodiments

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

Fig. 1      shows a three-dimensional point P in the object space that is projected onto a two-dimensional image plane in the image space of the imaging device;

Fig. 2      shows a schematic three-dimensional view illustrating the determination of the elevation of the imaging device above the horizontal plane;

Fig. 3      shows a schematic three-dimensional view of the Euler angles.

Fig. 4      shows a schematic three-dimensional view of the imaging of the ruler object in the horizontal plane;

Fig. 5      schematically depicts a way to relate the ruler object extent in the image and the object space;

Fig. 6     schematically shows a sectional plane that is facing the imaging device;

Fig. 7     schematically shows a sectional plane that is facing the imaging device at an angle;

Fig. 8     schematically depicts the application of the method to a plurality of targets and horizontal planes.

Fig. 9     shows a recorded image form the aerial vehicle with a ruler object and a pole as a target object; and

Fig. 10    shows a recorded image from the aerial vehicle while the extent of the ruler is obtained by a digital map.

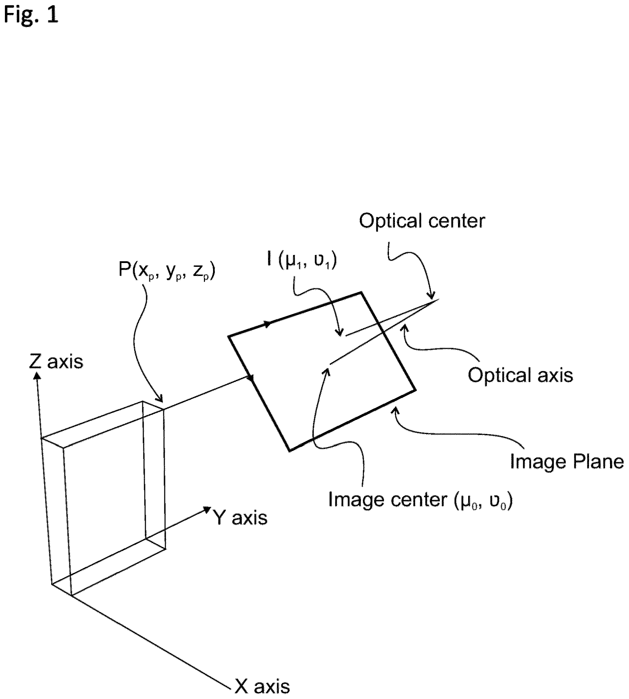

In the first part of the example section, basic principles of the pinhole camera model (cf Fig. 1) are elaborated. After that, it is analyzed how computer vision can be performed when dealing with imaging devices comprised by an aerial vehicle such as an unmanned aerial vehicle (UAV). The last part of this section presents and describes the method according to the invention, to estimate the height of an object or an object portion from a single image acquired with the imaging device of the aerial vehicle.

*Pinhole camera model*

In computer vision, imaging devices such as cameras may be modelled according to a pinhole camera model. This model considers a central projection, using the optical center of the imaging device and an image plane (that is perpendicular to the imaging device' optical axis; see Fig. 1) at which for example a pixel array for recording the image may be located. In the image space of the imaging device a mirror image is formed in on the image plane (where the pixel array is located). However, for illustrating purposes the image plane is represented in front of the imaging device in the object space. The pinhole camera model represents every three-dimensional point P in the object space (expressed by world coordinates $x_p, y_p, z_p$) by the intersection between the image plane and the camera ray line that connects the optical center (where the pinhole is located) with the point P (this intersection is called the image point, noted with I in Fig. 1).
The pinhole camera projection can be described by the following linear model

$$\begin{bmatrix} \mu_i \\ v_i \\ 1 \end{bmatrix} = K[RT] \begin{bmatrix} x_p \\ y_p \\ z_p \\ 1 \end{bmatrix} \qquad (1)$$

where K is a calibration matrix, that may be defined as follow:

$$K = \begin{bmatrix} \alpha_\mu & \gamma & \mu_0 \\ 0 & \alpha_v & v_0 \\ 0 & 0 & 1 \end{bmatrix} \qquad (2)$$

$\alpha_\mu$ and $\alpha_v$ represent the focal length expressed in pixels. $\mu_0$ and $v_0$ are the coordinates of the image center expressed in pixels, with origin in the upper left corner (see Fig. 1). $\gamma$ is the skew coefficient between the x and y axis, this latter parameter is very often 0.
The focal length, (which can be here considered as the distance between the image plane and the optical center) can be also expressed in terms of distance (e.g. mm instead of pixels) considering the following expressions:

$$F_x = a_\mu \frac{W_\mu}{w_\mu} \qquad (3)$$

$$F_y = a_v \frac{W_v}{w_v} \qquad (4)$$

where $w_\mu$, and $w_v$ are, respectively, the image width and length expressed in pixels, $W_\mu$ is the width and $W_v$ the length of the imaging device sensor expressed in world units (e.g. mm), such that a pixel pitch may be determined from this information. Usually, $F_x$ and $F_y$ have the same value, although they may differ due to several reasons such as flaws in the digital camera sensor or when the lens compresses a widescreen scene into a standard-sized sensor. R and T in equation (1) are the rotation and translation matrices of the camera, respectively, in relation to a world coordinate system that is fixed in the object space. These include the extrinsic parameters which may be comprised by the imaging device parameters.

R is defined in this case by the angles around the axes (X, Y and Z) of the world coordinate system needed for rotating the image coordinate system axes in order to get them coincident (or parallel) with the world coordinate system axes. In the case of rotation around the X axis by an angle $\theta_x$, the rotation matrix $R_x$ is given by (1):

$$R_x = \begin{bmatrix} 1 & 0 & 0 \\ 0 & \cos(\theta_x) & -\sin(\theta_x) \\ 0 & \sin(\theta_x) & \cos(\theta_x) \end{bmatrix} \tag{5}$$

Rotations by $\theta_y$ and $\theta_z$ about the Y and Z axes can be written as:

$$R_y = \begin{bmatrix} \cos(\theta_y) & 0 & \sin(\theta_y) \\ 0 & 1 & 0 \\ -\sin(\theta_y) & 0 & \cos(\theta_y) \end{bmatrix} \tag{6}$$

$$R_z = \begin{bmatrix} \cos(\theta_z) & -\sin(\theta_z) & 0 \\ \sin(\theta_z) & \cos(\theta_z) & 0 \\ 0 & 0 & 1 \end{bmatrix} \tag{7}$$

A rotation R about any arbitrary axis can be written in terms of successive rotations about the X, Y and finally Z axes, using the matrix multiplication shown below:

$$R = R_z R_y R_x \tag{8}$$

In this formulation $\theta_x$, $\theta_y$ and $\theta_z$ are the Euler angles.

T is expressed by a three-dimensional vector which defines the position of the camera against the origin of the world coordinate system. Scaling does not take place in the definition of the camera pose. Enlarging the focal length or sensor size would provide the scaling.

The next paragraph describes the lens distortion effects and procedures for their correction.

*Lens distortion and compensation*

In the following the terms "imaging device" and "camera" may be used interchangeably. The pinhole model does not consider that real lenses may produce several different non-linear distortions. The major defects in cameras and imaging devices are radial aberrations, caused by light refraction differences along with the spherical shape of the lens. Other distortions, like the tangential distortion, which is generated when the lens is not parallel to the imaging sensor or when several component lenses are not aligned over the same axis, have minor relevance in quality objectives and will not be considered in this study. The radial aberrations can usually be classified as either barrel distortions or pincushion distortions, which are quadratic, meaning they increase as the square of the distance from the center. Removing a distortion means obtaining an undistorted image point, which can be considered as projected by an ideal pinhole camera, from a distorted image point.

*Approach to retrieve an elevation between the horizontal plane and the imaging device*

As discussed in the previous paragraph, the determination of the height 20 of the object 100 requires a metric to be established in the image. According to the invention, this is achieved by determining an information on the relative elevation V of the imaging device with respect to the horizontal plane 200 on which the object 100 is located. Theoretically, this can be easily done by subtracting the elevation of the aerial vehicle / imaging device and the elevation of the horizontal plane. In urban areas, it is often possible to find the exact altitude of the target (the elevation of squares or streets are often well known). The problem lies in the accuracy related to the position of the aerial vehicle: consumer-level aircraft do not reach a sufficient level of accuracy for the scope of estimating the height of the object (e.g. Phantom 4 PRO from DJI has a vertical elevation uncertainty of $\pm$ 0.5 m). It is here proposed a novel approach to retrieve the elevation V using only a ruler object 10 comprising or consisting of a horizontal distance between two points visible in the image. The ruler object 10 extends at least partially in the horizontal plane 200 and has a known horizontal extent along at least one direction in the horizontal plane 200. Particularly, the use of the ruler object 10, renders the acquisition of GPS coordinates or other geospatial information for determining the height of the body part obsolete.

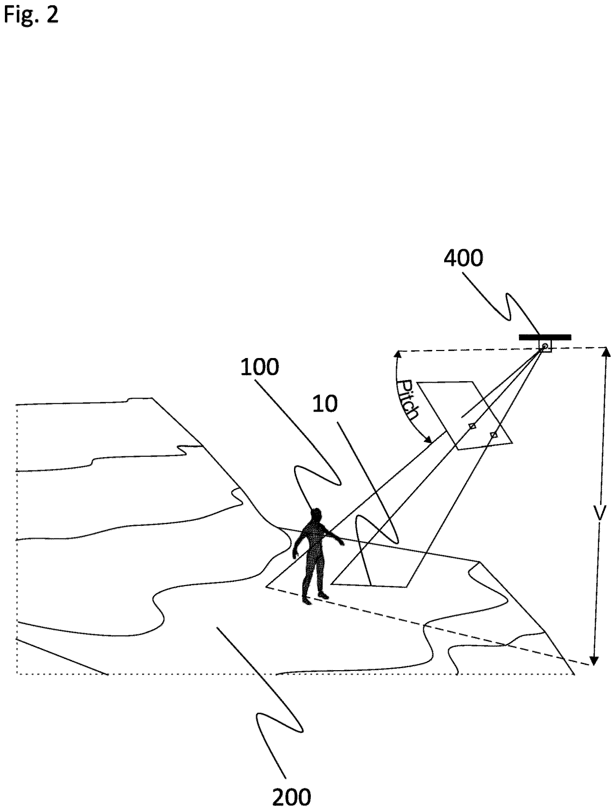

Fig. 2 illustrates the method of determining the elevation of the imaging device above the horizontal plane 200. The extent of the ruler object 10, i.e. the distance between two points visible in the image needs to be available or is determined. However, it is noted that the coordinates of the two points on the ground are not needed, solely the distance between the points. This distance can be of any size and oriented in any spatial direction, but it must at the same elevation as the horizontal plane. Therefore, it should be either close to the object located in an uneven area or even farther, if the object is in a flat area, e.g. an open square or field. The elevation V of the imaging device above the horizontal plane 200, is calculated by determining the extent of the ruler object 10 in the image space (or at least determining the end points defining the extent of the ruler object in the image space), a pitch and a roll angle of the camera relative to the object space, and the extent of the ruler object 10 in the object space along the horizontal plane 200 along said one direction. No other information is required. This very limited amount of information is enough to calculate the elevation V of the imaging device above the horizontal plane 200.

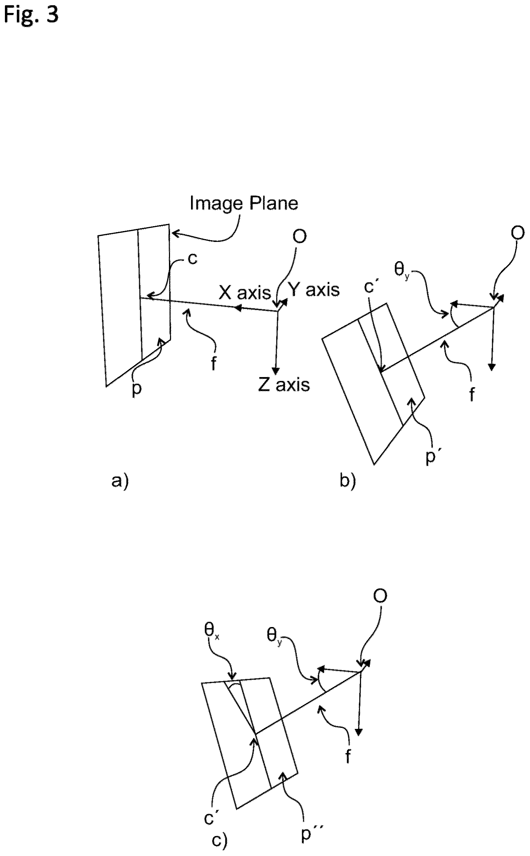

For determining the elevation V, it can be assumed that the imaging device is in an initial state that is characterized by the Euler angles boing zero ($\theta_x = \theta_y = \theta_z = 0$) with the origin of an imaging device-bound coordinate system (also referred to as local coordinate system) in the center of the pinhole or the corresponding point of the imaging device. For the purpose of the invention, the local coordinate system has units of pixels that correspond to the array detector pixels. A center point of the image plane c has image coordinates equal to $\mu_0$ and $v_0$ and considering the imaging device bound coordinate system, the coordinates ($x_c$, $y_c$, $z_c$) of this point would be (cf. Fig. 3):

$$c = (f, 0, 0) \tag{9}$$

Where $f$ is the focal length expressed in pixels.

Let us now consider a generic point p in the image plane of coordinates $\mu_p$ and $v_p$. The coordinates ($x_p$, $y_p$, $z_p$) of this point in the local coordinate system can be retrieved as follows:

$$p = (f, (\mu_0 - \mu_{p)} , (v_0 - v_p)) \tag{10}$$

In the following the position of the point p in the local coordinate systems after the rotations defined by Euler angles is derived. Without loss of generality, $\theta_z$ (yaw angle) is set to zero (cf. Fig. 3a). Thus, the position of the point p remains unchanged, as well as the orientation of the image plane and position of the center c. The rotation of the coordinates of the point p due to pitch ($\theta_y$) can be then calculated using $R_y$ (see equation 6 and Fig. 3a and 3b).

In Fig. 3a the imaging device is in an initial state comparable to the inertial frame ($\theta x = \theta y = \theta z = 0$). Black arrows represent the imaging device axes. The point O is the imaging device center and the origin of the local coordinate system defined for this model; f is the focal length of the imaging device (oriented along the X axis, which is therefore the direction of the yaw angle); c is the image center, p is a generic point in the image plane. In the proposed model, the yaw angle ($\theta z$) is always zero, therefore no system rotation is applied. The pitch ($\theta y$) is a rotation around the Y axes and it generates the state represented graphically in Fig. 3b. The roll ($\theta x$) rotation needs to take place around the axes defined by O-c' and generates the state represented graphically in Fig. 3c).

The coordinates of the point p' after rotation due to pitch ($x'_p, y'_p, z'_p$) can be then calculated as follow:

$$\begin{bmatrix} x'_p \\ y'_p \\ z'_p \end{bmatrix} = \begin{bmatrix} \cos(\theta_y) & 0 & \sin(\theta_y) \\ 0 & 1 & 0 \\ -\sin(\theta_y) & 0 & \cos(\theta_y) \end{bmatrix} \begin{bmatrix} x_p \\ y_p \\ z_p \end{bmatrix} \tag{11}$$

Similarly, it is possible to retrieve the coordinates of the image center c' after pitch rotation ($x'_c, y'_c, z'_c$).

It is now necessary to apply the rotation due to roll angle ($\theta_x$) to determine the position of the point p" in the local coordinate system after the camera rotations. In this case, it is necessary to apply a rotation along the axis O-c' using the following sequence of rotations T:

$$[T_{O-c\prime}] = [R_x]^{-1}[R_y]^{-1}[R_{Roll}][R_y][R_x] \tag{12}$$

Where:

$$R_x = \begin{bmatrix} 1 & 0 & 0 \\ 0 & \dfrac{z'_c}{Q} & -\dfrac{y'_c}{Q} \\ 0 & \dfrac{y'_c}{Q} & \dfrac{z'_c}{Q} \end{bmatrix} \tag{13}$$

$$R_y = \begin{bmatrix} \dfrac{Q}{L} & 0 & -\dfrac{x'_c}{L} \\ 0 & 1 & 0 \\ \dfrac{x'_c}{L} & 0 & \dfrac{Q}{L} \end{bmatrix} \tag{14}$$

$$R_z = \begin{bmatrix} \cos(\theta_x) & -\sin(\theta_x) & 0 \\ \sin(\theta_x) & \cos(\theta_x) & 0 \\ 0 & 0 & 1 \end{bmatrix} \tag{15}$$

$$R_y{}^{-1} = \begin{bmatrix} \dfrac{Q}{L} & 0 & \dfrac{x'_c}{L} \\ 0 & 1 & 0 \\ -\dfrac{x'_c}{L} & 0 & \dfrac{Q}{L} \end{bmatrix} \tag{16}$$

$$R_x{}^{-1} = \begin{bmatrix} 1 & 0 & 0 \\ 0 & \dfrac{z'_c}{Q} & \dfrac{y'_c}{Q} \\ 0 & -\dfrac{y'_c}{Q} & \dfrac{z'_c}{Q} \end{bmatrix} \tag{17}$$

and

$$L = \sqrt{{x'_c}^2 + {y'_c}^2 + {z'_c}^2} = f \tag{18}$$

$$Q = \sqrt{{y'_c}^2 + {z'_c}^2} \tag{19}$$

The coordinates of the point p" (see Fig. 3c) are therefore given as:

$$\begin{bmatrix} x''_p \\ y''_p \\ z''_p \end{bmatrix} = [T_{O-c\prime}] \begin{bmatrix} x'_p \\ y'_p \\ z'_p \end{bmatrix} \tag{20}$$

As a side note in Fig. 1 the optical axis and the pitch can be used to calculate the elevation of the imaging device above the horizontal plane 200. However, more generally, the point can be anywhere in the image (not necessarily in the centre, where the optical axis intersects with the image plane) for example point p" in Fig. 3. In this case, one cannot use the pitch and the optical axis, but, still, it is possible to obtain the elevation.

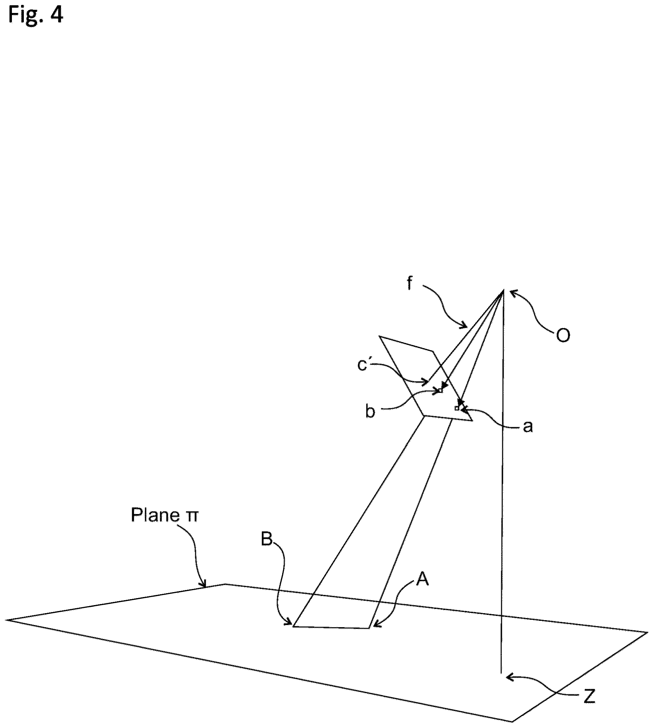

Turning to Fig. 4, where a and b are image points whose coordinates in the local coordinates system are ($x_a$, $y_a$, $z_a$) and ($x_b$, $y_b$, $z_b$) - these coordinates can be defined according to the procedure described above. The plane $\pi$, in analogy with Fig. 3, is the horizontal surface where the target lies. The point O, is the imaging device center which is considered here as the origin of the local coordinate system (0, 0, 0). The point Z, that lies on the plane $\pi$, is defined by the coordinates (0, 0, $z_\pi$), wherein $z_\pi$ is the height i.e. the elevation of the imaging device above the horizontal plane $\pi$. A and B are points lying in the plane $\pi$ and form the ruler object. The coordinates of A and B are not known but, as already pointed out, the distance AB is a known parameter that needs to be converted in pixels.

The plane $\pi$, can be expressed by the following parametric equation:

$$cz_\pi = d \tag{21}$$

Where c and d are coefficients belonging to $\mathbb{R}$, and the points A and B can be given as follow:

$$A = t_i \overrightarrow{Oa} \cap \pi \tag{22}$$

$$B = t_j \overrightarrow{Ob} \cap \pi \tag{23}$$

Where $t_1$ and $t_2$ are scalar coefficients, $\overrightarrow{Oa} = (x_a, y_a, z_a)$, and $\overrightarrow{Ob} = (x_b, y_b, z_b)$. The goal of this approach is to calculate the elevation $z_\pi$, which is a prerequisite to calculate the height of the object. As mentioned previously, the elevation is determined using only the extent of the ruler object in the plane, i.e. the distance AB between the point A an d B in the object space, the orientation of the camera, namely the pitch and the roll angle, and the focal length of the imaging device as well as the pixel pitch or an equivalent information, such as the size of the pixel array. From the recorded image, coordinates of the points a and b may be derived in the image space.

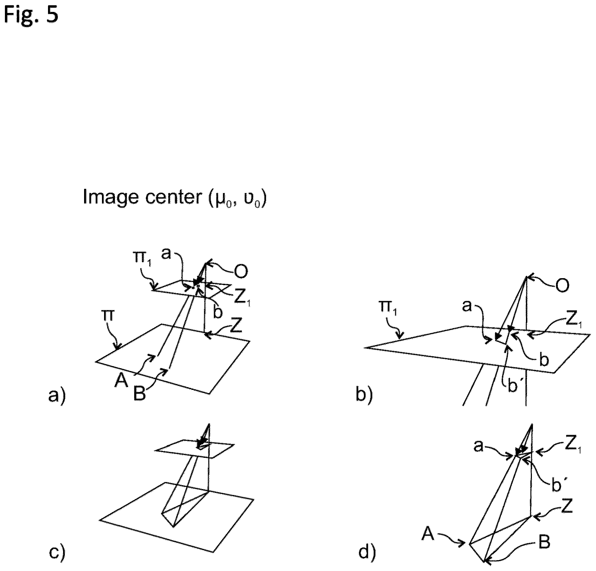

In order to determine the elevation of the imaging device, another horizontal plane $\pi_1$ may be defined comprising one of the two points in the image plane, for instance the point a in this case (see Fig. 5a).

The point Z1 in Fig. 5 has coordinates equal to (0, 0, $z_{\pi1}$) but $z_{\pi1}$ is equal to $z_a$, since the point Z1 and the point a are lying on the same horizontal plane $\pi_1$. Therefore, the parametric equation of the plane $\pi_1$ is given as follows:

$$cz_a = d \tag{24}$$

wherein c and d are coefficients belonging to $\mathbb{R}$.

Considering the point b' (intersection of the vector $\overrightarrow{Ob}$ and the plane $\pi_1$, see Fig. 5a). The coordinates of this point can be calculated as follow:

$$(x_{b'}, y_{b'}, z_{b'}) = (t_1 x_b, t_1 y_b, t_1 z_b) \tag{25}$$

Since the point b' and the point a are lying in the same horizontal plane the following relation holds true:

$$t_1 z_b = z_a \tag{26}$$

And so, the parameter $t_1$ can be retrieved:

$$t_1 = \frac{z_a}{z_b} \tag{27}$$

Now that the scalar coefficient $t_1$ is known, the coordinates of the point b' can be calculated and used to retrieve the distance a-b' ($z_a$ and $z_b$, are equal and therefore not considered in the equation below):

$$a - b' = \sqrt{(x_a - x_{b'})^2 + (y_a - y_{b'})^2} \tag{28}$$

The triangle a-b'-Z1 and the triangle A-B-Z are homologous (see Fig. 5c and 5d). Taking into account that Z1 = $(0, 0, z_{\pi 1})$ and Z = $(0, 0, z_{\pi})$ the following is true:

$$ab' : z_{\pi 1} = AB : z_{\pi} \tag{29}$$

Since AB is a known parameter and ab' is retrieved in the equation (29), the elevation $z_{\pi}$ can be calculated.

Alternatively, if a digital elevation model is available, the elevation of the aerial vehicle can be calculated for example as follows: The horizontal distance would be, for example, AZ (distance from point A to point Z) and the hypotenuse would be OA (distance from the center of the imaging device O to point A).

AZ could be obtained if the planar coordinates (lat-long) of the point A (e.g. taken from a map or Google Earth) and the lat-long of the imaging device (assuming they are very accurate) are provided.

The hypotenuse OA could be obtained if the planar coordinate and elevation of the point A and coordinates and elevation of the imaging device centre O are known. This latter case can be obtained if a digital elevation model is available.

Thus, it is important to note that if an accurate digital elevation model and an accurate position and orientation of the imaging device is available, it is possible to directly retrieve the coordinates of the point A (interception of $t_i\overrightarrow{Oa}$ with the digital elevation model) considering the orientation of the camera ($\theta x$, $\theta y$, $\theta z$). In this case there is no need for reference points, or a horizontal plane, etc.

*Estimation of the height of the object*

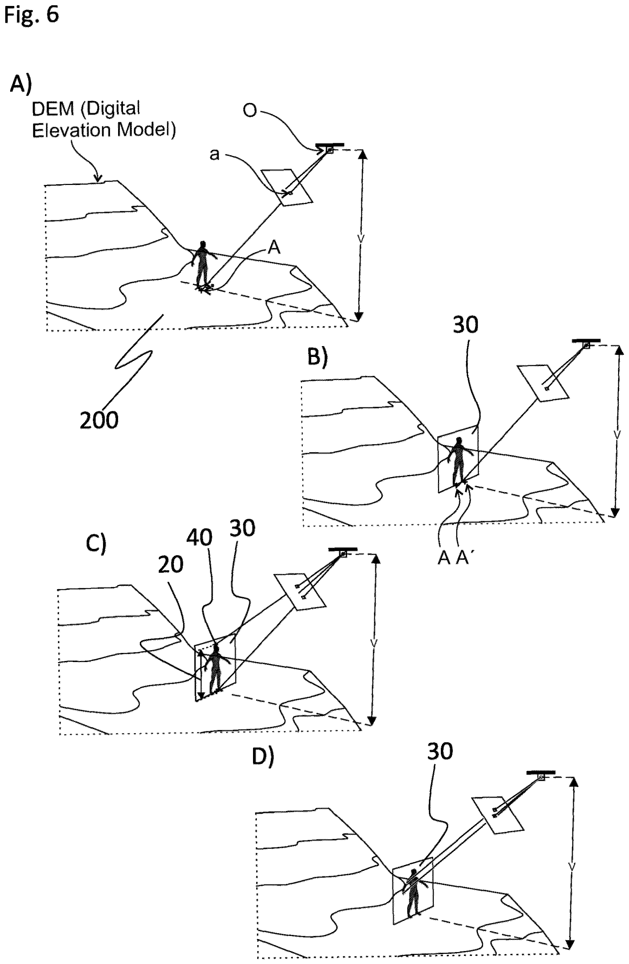

Once the elevation V of the aerial vehicle is obtained, it is possible to determine the coordinates of a point of contact A, where the object touches the ground, i.e. the horizontal plane 200 and to create a vertical sectional plane 30 oriented perpendicular to the horizontal plane 200 (see e.g. Fig. 6B, C and D). This sectional plane 30 allows for measuring distances between points that are comprised in the sectional plane 30, such as for example the top (vertex of the head) and the bottom (feet) of the person, in case the object is a person. This way, it is possible to determine the height 30 of virtually any body part of the person 100. If the person assumes a pose that is different to an upright standing pose, it is possible to measure body segments such arm span, length of the head, distance between eyes, etc.

The method according to the invention, allows the estimation of the length of any body part or portion intersecting or being comprised in the sectional plane 30 (see in Fig. 6D the example of an arm).

In Fig. 6A a graphical representation of the method to retrieve the height of the object once the relative elevation V between the object 100 (here the person) and the aerial vehicle is known is illustrated. The method is configured to generate an imaginary vertical sectional plane 30, forming a "section" through the object, e.g. the person and, over which, it is possible to estimate the distance between relevant points comprised in the sectional plane 30, such as the head and the feet. The approach can be also used to estimate the length of body parts (an arm, for example) independently from the orientation of the person relative to the imaging device.

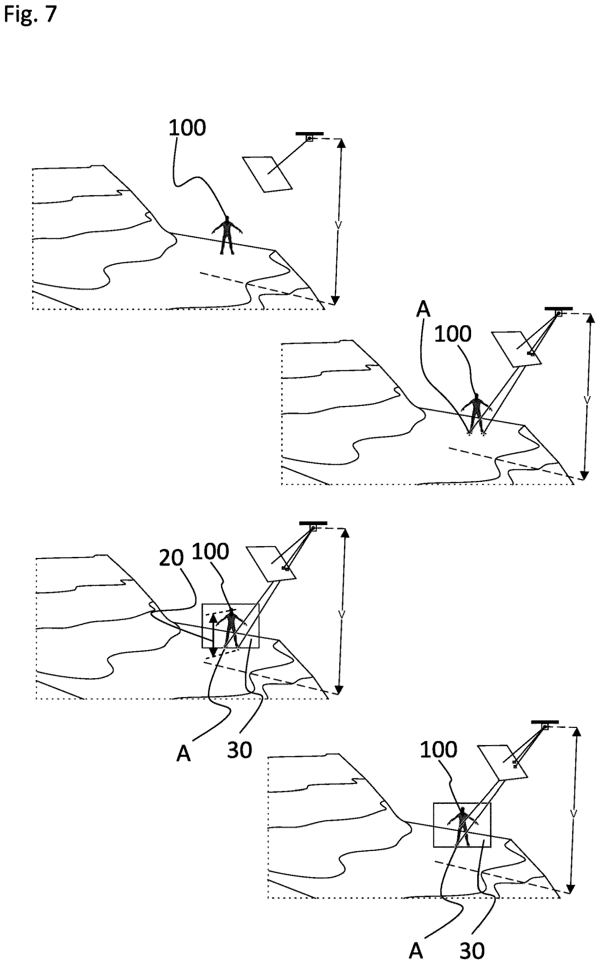

The method can be used also when the object 100 is not located in the center of the image and/or in a random orientation with respect to the imaging device. For example, as shown in Fig. 7, two points of contact A, A' (indicated by white crosses at the feet) such as the tip of feet, can be used to define the position and orientation of the sectional plane 30 (the third point required can have the same X and Y s of one of the two points and different Z) to fit properly the orientation of the person and accurately retrieve the height but also the length of the body parts. Please note that when dealing with vertical distances in the sectional pane 30 (e.g. two points with same X and Y and different Z) the orientation of the sectional plane 30 is not relevant, i.e. when only the height of a body part is determined the orientation is of no particular interest. However, when a distance between body parts is to be determined that extends not only vertically from the horizontal plane, the orientation of the section plane 30 is important.

It is appreciated that while without loss of generality, the examples focus on a person, the object can be any other object, as elaborated previously.

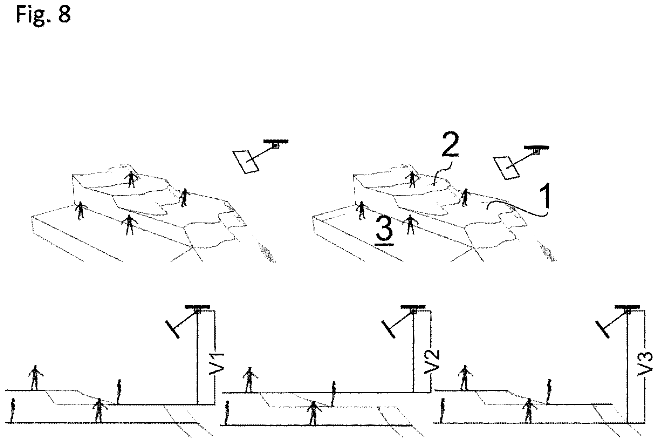

According to a further embodiment of method according to the invention, it is also possible to determine the height 20 of several body parts of different persons concurrently visible in the image plane. However, if the person/objects are not all over the same horizontal plane, multiple elevations from a plurality of horizontal planes need to be calculated as illustrated in Fig. 8. In Fig. 8 it is necessary to retrieve three elevations of the imaging device relative to three different horizontal planes, because the persons are located at three different horizontal planes. This may be achieved by retrieving at least one ruler object at each horizontal plane.

Turning back to Fig. 6A, it is noted that Fig. 6A may be used to illustrate the possibility to obtain the elevation of the aerial vehicle by means of a positioning system, instead of using a ruler object.

Assuming a digital elevation model (DEM) is known or provided to the method.

The interception of the optical ray passing through a with the DEM gives the coordinate of the point A where the object is touching the ground. Now that the coordinate of the point A is known, it is possible to calculate the relative elevation of the aerial vehicle and proceed with the creation of the section planes. For obtaining the elevation therefore, the exact position of the aerial vehicle is needed in the world coordinate system, an accurate DEM (in the same word coordinates), an Orientation of the camera, a focal length and pixel pitch.

*Process description for determining the height of the object/person's body part*

In case the sectional plane is oriented perpendicular to the horizontal plane and to a projection of the principal optical ray of the imaging device onto the horizontal plane (cf Fig. 6, broken line), the following steps are executed:

1. Identifying a point of contact in the image where the person touches the ground, e.g. lower part of one foot. The point of contact shall be referred to as p in this example.

2. Apply the rotations and transformations described in (13) to (24) to find $p''(x_{p''}, y_{p''}, z_{p''})$.

3. Determine the interception between the vector passing per p" and the horizontal plane.

   a. The equation of the horizontal plane that defines the ground is: c *(-V)* = d (horizontal plane at -V form the coordinate centre-camera centre).

   b. The equation of the vector passing per p" is (N.B. vector is passing by the centre):

   i.
   $$X = 0 + x_{p''}*t$$

   ii.
   $$Y = 0 + y_{p''}*t$$

   iii.
   $$Z = 0 + z_{p''}*t$$

   c. Determine the coordinates of the point P $(X_P, Y_P, Z_P)$ that represents the interception between the vector passing per p" and the horizontal plane in the object space

4. Since the sectional plane is perpendicular to the projected principal ray line, we can infer that the vertical plane is passing through the following points:

   i. P = $X_P, Y_P, Z_P$

   ii. P1 = $X_P, Y_P + m, Z_P$ (where m is a generic value that belongs to M.

   iii. P1 = $X_P, Y_P + m, Z_P + n$ (where m and n are a generic value that belongs to $\mathbb{R}$.

5. The three points can be used to calculate the equation of the sectional plane

6. Locate in the <u>image plane</u> two points, representing the top-bottom of the target or any start point-end point of a body part.

7. Apply rotations and transformations as seen in the point 2 of this list.

8. Find the interceptions between the vectors passing per those two points and the vertical sectional plane.

9. The Euclidean distance between the interceptions in the vertical section plane must be multiply by the pixel pitch, this value is the desired length (height of the person or length of the body part).

10. The sectional plane may be moved longitudinally to better "section" the target. For example, if point P in the image where the body touches the ground (see 1) is located at the tip of the foot, said point may be moved 20 cm (200mm) to be located exactly where the ankle and thus the leg of the person is. To do so:

   i.

$$P_{leg} = X_P + g, Y_P, Z_P \text{ (where g = 200 * pixel pitch)}$$

   ii. $P1_{leg} = X_P + g, Y_P + m, Z_P$ (where m is a generic value that belongs to $\mathbb{R}$.

   iii. $P2_{leg} = X_P + g, Y_P + m, Z_P + n$ (where m and n are a generic value that belongs to $\mathbb{R}$

Having obtained the sectional plane, it is possible to determine any distance of a body part relative to another while the body parts or at least body portions are comprised in the sectional plane.

In case the sectional plane is to be oriented differently with respect to the projected principal ray, e.g. along a coronal plane of the person oriented at random to the imaging device, the method steps are adapted correspondingly.

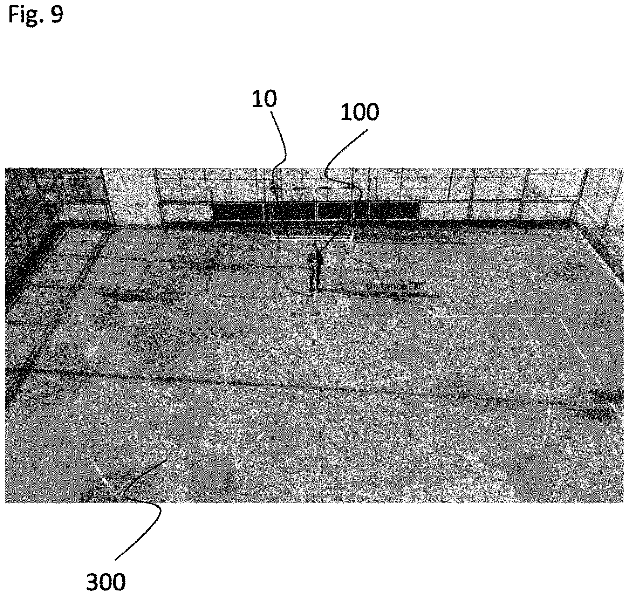

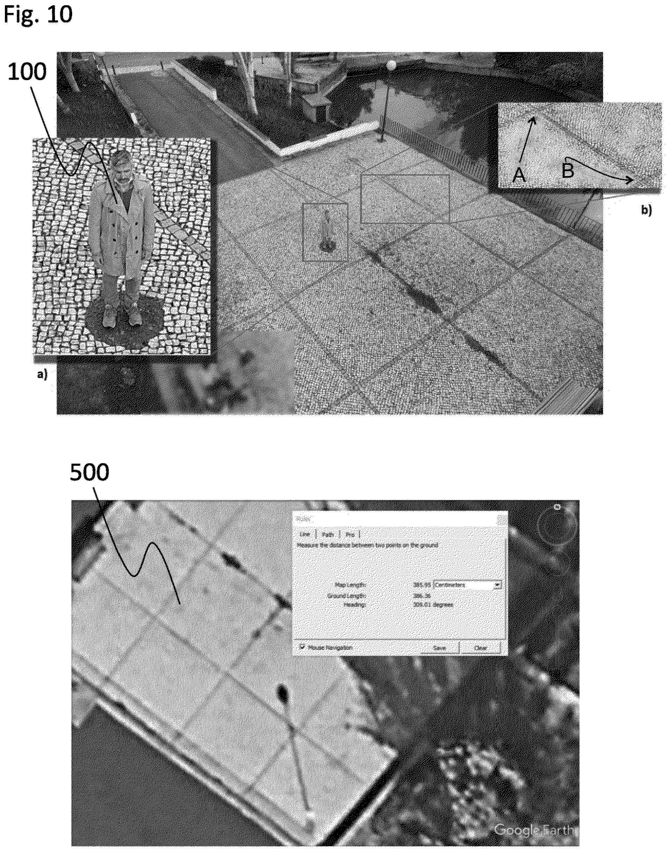

In Figs. 9 and 10 examples are shown for real images 300 that are taken and evaluated. In Fig. 9, the method was applied to estimate the height of a pole standing vertically upright from a court. As a ruler object several markings on the court can be used of which the exact length has been measured.

Similarly, in Fig. 10 (upper panel), as a ruler object a floor pattern has been used to estimate the height of a person standing on the court.

For determining the length of the ruler object in Fig. 10, data provided by the service of Google Earth (see Fig. 10 lower panel) has been used. The estimate height of the person could nonetheless be recovered with an error of about 2 cm only.

## Claims

1. A method for determining a height (20) of an object (100) or object's subparts (30) above a horizontal plane (200) from a single image (300) recorded by an imaging device comprised by an aerial vehicle (400), wherein the imaging device is configured to record an image (300) in an image space from an object space, the method comprising the steps of:

   - Flying with the aerial vehicle (400) above the horizontal plane (200),
   - Recording a single image with the imaging device, wherein the object (100) is comprised by the image,
   - Acquiring imaging device parameters, wherein the imaging device parameters comprise information on an orientation ($\theta x$, $\theta y$, $\theta z$) of the imaging device in relation to a world coordinate system and a focal length (f) as well as an information comprising the pixel pitch of the imaging device,
   - Determining an information on the elevation (V) of the imaging device above at least one point of contact (A) at which the object (100) is in contact with the horizontal plane (200) in the object space,
   - Determining the height (20) of the object (100) or the object's subpart (30) above the horizontal plane (200) in the object space by means of a projection model that relates coordinates in the object space with coordinates in the image space using the recorded image (300), the imaging device parameters and the information on the elevation (V) of imaging device,
   **characterized in that** the method further comprises the step of:

      - Recording in the image (300) a ruler object (10) in the object space, wherein the ruler object (10) has a known extent along at least one direction in the horizontal plane (200) in the object space, wherein the elevation (V) of the imaging device is determined from the imaging device parameters and the extent of the ruler object (10) in the horizontal plane (200).

2. The method according to claim 1, wherein the ruler object (10) extends between two points in the horizontal plane (200) and the extent is the distance between the points.

3. The method according to claim 1 or 2, wherein the projection model is a pinhole camera projection model.

4. The method according to any of the preceding claims, wherein the object's subpart (30) is a body part or a body portion, particularly a head of a person, particularly a vertex of the head of the person.

5. The method according to claim 4, wherein the point of contact (A) is at a foot of a person, particularly at a sole of a foot, or wherein the points of contact are at the feet, particularly at the soles of the feet of the person.

6. The method according to one of the preceding claims, wherein the image comprises a plurality of ruler objects (10) located in the horizontal plane (200), wherein for each of the ruler object (10) the extent along at least one direction in the object space is known, particularly wherein the ruler object (10) of the plurality of ruler objects with the largest extent in the image is selected for determining the height (20) of the object (100) above the horizontal plane (200) in the object space, and particularly wherein said selected ruler object is also used for determining the elevation (V) of the imaging device .

7. The method according to one of the preceding claims, wherein the extent of the ruler object (10) in the horizontal plane (200) in the object space is determined or acquired from a map or satellite data (500).

8. The method according to one of the preceding claims, wherein the object's subpart (30), particularly the vertex of the head of a person is determined by a pattern recognition method, particularly implemented as a trained artificial neural network.

9. The method according to one of the preceding claims, wherein a distance and/or a length and an orientation of the object in the object space is determined from the image.

10. The method according to one of the preceding claims and claim 4 wherein a posture of the person is determined by evaluating a plurality of lengths and orientations of body parts or portions of the person.

11. The method according to claim 2 or 7 as well as any of the preceding claims, wherein if an estimated statistical error of the determined height (20) of the object (100) or the object's subpart (30) above the horizontal plane (200) is greater than a predefined error value, particularly wherein the error value is greater than 15 cm, more particularly greater than 10 cm or 5 cm, one or more of the following parameters is adjusted and the image is retaken, particularly automatically:

   - A pitch angle of the imaging device, particularly wherein the pitch angle is adjusted to be in a range of 5° and 70°;
   - A distance of the imaging device to the ruler object, particularly wherein the distance is decreased;
   - The extent of the ruler object in the image, particularly wherein the extent of the ruler in the image is adjusted by taking the image from a different perspective on the ruler object.

12. The method according to any of the preceding claims, wherein with the projection model for the imaging device a metric is established in the image space that is associated to the object space, wherein with the metric a length of the object, an orientation of the object, or a distance of the object is determined.

**Patentansprüche**

1. Verfahren zum Bestimmen einer Höhe (20) eines Objekts (100) oder von Teilen (30) des Objekts über einer horizontalen Ebene (200) aus einem einzelnen Bild (300), das von einer Bildgebungsvorrichtung aufgezeichnet wurde, die in einem Luftfahrzeug (400) enthalten ist, wobei die Bildgebungsvorrichtung so konfiguriert ist, dass sie ein Bild (300) in einem Bildraum von einem Objektraum aufzeichnet, wobei das Verfahren die folgenden Schritte umfasst:

   Fliegen mit dem Luftfahrzeug (400) über der Horizontalebene (200),
   Aufzeichnen eines einzelnen Bildes mit der Bildgebungsvorrichtung, wobei das Objekt (100) in dem Bild enthalten ist,

Erfassen von Parametern der Bildgebungsvorrichtung, wobei die Parameter der Bildgebungsvorrichtung Informationen über eine Orientierung ($\theta$x, $\theta$y, $\theta$z) der Bildgebungsvorrichtung in Bezug auf ein Weltkoordinatensystem und eine Brennweite (f) sowie eine Information umfassen, die den Pixelabstand der Bildgebungsvorrichtung umfasst,

- Bestimmen einer Information über die Höhe (V) der Bildgebungsvorrichtung über mindestens einem Kontaktpunkt (A), an dem das Objekt (100) mit der horizontalen Ebene (200) im Objektraum in Kontakt steht,

Bestimmen der Höhe (20) des Objekts (100) oder des Teils (30) des Objekts über der horizontalen Ebene (200) im Objektraum mittels eines Projektionsmodells, das Koordinaten im Objektraum mit Koordinaten im Bildraum unter Verwendung des aufgezeichneten Bildes (300), der Parameter der Bildgebungsvorrichtung und der Information über die Höhe (V) der Bildgebungsvorrichtung in Beziehung setzt,

**dadurch gekennzeichnet, dass** das Verfahren ferner den folgenden Schritt umfasst:

Aufzeichnen eines Maßstabobjekts (10) im Objektraum im Bild (300), wobei das Maßstabobjekt (10) eine bekannte Ausdehnung entlang mindestens einer Richtung in der horizontalen Ebene (200) im Objektraum aufweist, wobei die Höhe (V) der Bildgebungsvorrichtung aus den Bildgebungsvorrichtungsparametern und der Ausdehnung des Maßstabobjekts (10) in der horizontalen Ebene (200) bestimmt wird.

2. Verfahren nach Anspruch 1, wobei sich das Maßstabobjekt (10) zwischen zwei Punkten in der horizontalen Ebene (200) erstreckt und die Ausdehnung der Abstand zwischen den Punkten ist.

3. Verfahren nach Anspruch 1 oder 2, wobei das Projektionsmodell ein Lochkamera-Projektionsmodell ist.

4. Verfahren nach einem der vorstehenden Ansprüche, wobei der Teil (30) des Objekts ein Körperteil oder ein Körperabschnitt ist, insbesondere der Kopf einer Person, insbesondere ein Scheitel des Kopfes der Person.

5. Verfahren nach Anspruch 4, wobei der Kontaktpunkt (A) sich am Fuß einer Person, insbesondere an einer Fußsohle, befindet oder wobei die Kontaktpunkte sich an den Füßen, insbesondere an den Fußsohlen der Person, befinden.

6. Verfahren nach einem der vorhergehenden Ansprüche, wobei das Bild eine Vielzahl von Maßstabobjekten (10) umfasst, die in der horizontalen Ebene (200) angeordnet sind, wobei für jedes der Maßstabobjekte (10) die Ausdehnung entlang mindestens einer Richtung im Objektraum bekannt ist, wobei insbesondere das Maßstabobjekt (10) der Vielzahl von Maßstabobjekten mit der größten Ausdehnung im Bild ausgewählt wird, um die Höhe (20) des Objekts (100) über der horizontalen Ebene (200) im Objektraum zu bestimmen, und insbesondere wobei das ausgewählte Maßstabobjekt auch verwendet wird, um die Höhe (V) der Bildgebungsvorrichtung zu bestimmen.

7. Verfahren nach einem der vorhergehenden Ansprüche, wobei die Ausdehnung des Maßstabobjekts (10) in der horizontalen Ebene (200) im Objektraum aus einer Karte oder aus Satellitendaten (500) bestimmt oder erfasst wird.

8. Verfahren nach einem der vorhergehenden Ansprüche, wobei der Teil (30) des Objekts, insbesondere der Scheitel des Kopfes einer Person, durch ein Mustererkennungsverfahren bestimmt wird, das insbesondere als ein trainiertes künstliches neuronales Netz implementiert ist.

9. Verfahren nach einem der vorhergehenden Ansprüche, wobei ein Abstand und/oder eine Länge und eine Ausrichtung des Objekts im Objektraum aus dem Bild bestimmt wird.

10. Verfahren nach einem der vorhergehenden Ansprüche und Anspruch 4, wobei eine Körperhaltung der Person durch Auswertung einer Vielzahl von Längen und Ausrichtungen von Körperteilen oder -abschnitten der Person bestimmt wird.

11. Verfahren nach Anspruch 2 oder 7 sowie einem der vorhergehenden Ansprüche, wobei, wenn ein geschätzter statistischer Fehler der ermittelten Höhe (20) des Objekts (100) oder des Teils des Objekts (30) über der horizontalen Ebene (200) größer als ein vorgegebener Fehlerwert ist, insbesondere wobei der Fehlerwert größer als 15 cm ist, insbesondere größer als 10 cm oder 5 cm, einer oder mehrere der folgenden Parameter angepasst werden und das Bild erneut aufgenommen wird, insbesondere automatisch:

- Neigungswinkel der Bildaufnahmevorrichtung, insbesondere wobei der Neigungswinkel so eingestellt wird, dass er in einem Bereich von 5° und 70° liegt;
- ein Abstand des Bildgebungsgeräts zum Maßstabobjekt, insbesondere wobei der Abstand verringert wird;
- die Ausdehnung des Maßstabobjektes im Bild, insbesondere wobei die Ausdehnung des Maßstabes im Bild durch Aufnehmen des Bildes aus einer anderen Perspektive auf das Maßstabobjekt eingestellt wird.

12. Verfahren nach einem der vorstehenden Ansprüche, wobei mit dem Projektionsmodell für die Bildgebungsvorrichtung eine Metrik im Bildraum erstellt wird, die mit dem Objektraum verbunden ist, wobei mit der Metrik eine Länge des Objekts, eine Ausrichtung des Objekts oder eine Entfernung des Objekts bestimmt wird.

## Revendications

1. Procédé de détermination d'une hauteur (20) d'un objet (100) ou de parties secondaires (30) d'un objet au-dessus d'un plan horizontal (200) à partir d'une image unique (300) enregistrée par un dispositif d'imagerie compris par un véhicule aérien (400), dans lequel le dispositif d'imagerie est configuré pour enregistrer une image (300) dans un espace d'image à partir d'un espace d'objet, le procédé comprenant les étapes consistant à :

   - voler avec le véhicule aérien (400) au-dessus du plan horizontal (200),
   - enregistrer une image unique avec le dispositif d'imagerie, dans lequel l'objet (100) est compris par l'image,
   - acquérir des paramètres de dispositif d'imagerie, dans lequel les paramètres de dispositif d'imagerie comprennent des informations sur une orientation ($\theta x$, $\theta y$, $\theta z$) du dispositif d'imagerie en relation avec un système de coordonnées mondiales et une longueur focale (f) ainsi qu'une information comprenant le pas de perçage du dispositif d'imagerie,
   - déterminer une information sur l'élévation (V) du dispositif d'imagerie au-dessus d'au moins un point de contact (A) auquel l'objet (100) est en contact avec le plan horizontal (200) dans l'espace d'objet,
   - déterminer la hauteur (20) de l'objet (100) ou de la partie secondaire (30) de l'objet au-dessus du plan horizontal (200) dans l'espace d'objet au moyen d'un modèle de projection qui met en relation des coordonnées dans l'espace d'objet avec des coordonnées dans l'espace d'image en utilisant l'image enregistrée (300), les paramètres de dispositif d'imagerie et l'information sur l'élévation (V) du dispositif d'imagerie,
   **caractérisé en ce que** le procédé comprend en outre l'étape consistant à :

   - enregistrer dans l'image (300) un objet de règle (10) dans l'espace d'objet, dans lequel l'objet de règle (10) a une étendue connue le long d'au moins une direction dans le plan horizontal (200) dans l'espace d'objet, dans lequel l'élévation (V) du dispositif d'imagerie est déterminée à partir des paramètres de dispositif d'imagerie et de l'étendue de l'objet de règle (10) dans le plan horizontal (200).

2. Procédé selon la revendication 1, dans lequel l'objet de règle (10) s'étend entre deux points dans le plan horizontal (200) et l'étendue est la distance entre les points.

3. Procédé selon la revendication 1 ou 2, dans lequel le modèle de projection est un modèle de projection à caméra à sténopé.

4. Procédé selon l'une quelconque des revendications précédentes, dans lequel la partie secondaire (30) de l'objet est une partie corporelle ou une portion corporelle, en particulier une tête d'une personne, en particulier un sommet de la tête de la personne.

5. Procédé selon la revendication 4, dans lequel le point de contact (A) est à un pied d'une personne, en particulier à une semelle d'un pied, ou dans lequel les points de contact sont aux pieds, en particulier aux semelles des pieds de la personne.

6. Procédé selon une des revendications précédentes, dans lequel l'image comprend une pluralité d'objets de règle (10) situés dans le plan horizontal (200), dans lequel pour chacun de l'objet de règle (10), l'étendue le long d'au moins une direction dans l'espace d'objet est connue, en particulier dans lequel l'objet de règle (10) de la pluralité d'objets de règle avec l'étendue la plus grande dans l'image est sélectionné pour déterminer la hauteur (20) de l'objet (100) au-dessus du plan horizontal (200) dans l'espace d'objet, et en particulier dans lequel ledit objet de règle sélectionné est également utilisé pour déterminer l'élévation (V) du dispositif d'imagerie.

7. Procédé selon une des revendications précédentes, dans lequel l'étendue de l'objet de règle (10) dans le plan horizontal (200) dans l'espace d'objet est déterminée ou acquise à partir d'une carte ou de données satellite (500).

8. Procédé selon une des revendications précédentes, dans lequel la partie secondaire (30) de l'objet, en particulier le sommet de la tête d'une personne, est déterminée par un procédé de reconnaissance de motif, en particulier mis en oeuvre en tant que réseau de neurones artificiels formés.

9. Procédé selon une des revendications précédentes, dans lequel une distance et/ou une longueur et une orientation de l'objet dans l'espace d'objet est déterminée à partir de l'image.

10. Procédé selon une des revendications précédentes et la revendication 4, dans lequel une posture de la personne est déterminée en évaluant une pluralité de longueurs et d'orientations de parties ou portions corporelles de la personne.

11. Procédé selon la revendication 2 ou 7 ainsi que l'une quelconque des revendications précédentes, dans lequel si une erreur statistique estimée de la hauteur déterminée (20) de l'objet (100) ou de la partie secondaire (30) de l'objet au-dessus du plan horizontal (200) est supérieure à une valeur d'erreur prédéfinie, en particulier dans lequel la valeur d'erreur est supérieure à 15 cm, plus particulièrement supérieure à 10 cm ou 5 cm, un ou plusieurs des paramètres suivants est ajusté et l'image est reprise, en particulier automatiquement :

   - un angle de pas du dispositif d'imagerie, en particulier dans lequel l'angle de pas est ajusté pour être dans une plage de 5° et 70° ;
   - une distance du dispositif d'imagerie à l'objet de règle, en particulier dans lequel la distance est diminuée ;
   - l'étendue de l'objet de règle dans l'image, en particulier dans lequel l'étendue de la règle dans l'image est ajustée en prenant l'image depuis une perspective différente sur l'objet de règle.

12. Procédé selon l'une quelconque des revendications précédentes, dans lequel avec le modèle de projection pour le dispositif d'imagerie, une mesure est établie dans l'espace d'image qui est associé à l'espace d'objet, dans lequel avec la mesure, une longueur de l'objet, une orientation de l'objet ou une distance de l'objet est déterminée.

Fig. 1

Fig. 2

## Fig. 3

a)

b)

c)

# Fig. 4

# Fig. 5

Image center ($\mu_0$, $\upsilon_0$)

a)

b)

c)

d)

Fig. 6

A)

DEM (Digital
Elevation Model)

O

a

A

200

B)

30

A A´

C)

20 40 30

D)

30

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2020273150 A1